# EUROPEAN PATENT APPLICATION

(11) **EP 1 978 314 A1**
(43) Date of publication of application: **08.10.2008**
(21) Application number: 07425196.8
(22) Date of filing: 03.04.2007
(51) Int. Cl.: F24J 3/08

(54) **Geothermal probe**

(71) Applicant: Iride S.r.l., 06154 Perugia (IT)
(72) Inventor: Blois, Luciano, 06154 Ponte S. Giovanni (Perugia) (IT); Blois, Cristiano Aldo, 06154 Ponte S. Giovanni (Perugia) (IT); Faina, Nicola, 06053 Deruta (PG) (IT)
(74) Representative: Marietti, Andrea

(57) **Abstract**

A geothermal probe (1) of the type to be installed within a hole (10) made in the ground (6), and which comprises at least one first delivery duct (2) and at least one second return duct (3) being fluidically connected to said first delivery duct for carrying a work liquid (30) suitable to exchange heat with the outside, characterized in that it comprises a thermally conductive material (4) that can be, at least partially, associated to said at least one first duct (2) and/or said at least one second duct (3).

## Description

The present invention relates to a geothermal probe, preferably of the vertical type. Particularly, the geothermal probe according to the present invention is of the type comprising a delivery duct and a return duct for a work fluid exchanging heat with the outside. This probe, as it is known, is inserted within the ground and is externally connected to a heat pump that is capable of heating or cooling a living environment either in winter or summer, respectively.

It should be observed that, while herein and below by probe will be meant a vertical probe, a horizontal probe falls, however, within the scope of protection of the present invention.

According to the prior art, these vertical geothermal probes are installed within holes made in the ground. After the probe has been lowered within the hole, the latter is filled with cement material, of bentonite type, which, after hardening, expands thus allowing the probe to be firmly anchored to the ground. This solution is not, however, without drawbacks. In fact, the probe, which can also be as long as 100 m, results to be hardly removable from the hole. Accordingly, in addition to the fact that it cannot be reused in another geothermal plant, when the preceding one is dismantled, it also causes a strong environmental impact, thus reducing the benefits deriving from the use of subsurface clean energy. Furthermore, it should be also considered that bentonite is an insulating material, and that if on the one side, it reduces the loss of heat occurring along the probe ducts, on the other side, the probes are required to be more than 100m long in order to permit the required heat exchange s between the ground and work liquid, and to allow a liquid to reach the heating pump at a substantially constant temperature.

The object of the present invention is to provide a more effective heat exchange between the geothermal probe and ground, such as to reduce the total length of the probe, along with the fact of firmly locking the probe within the hole made in the ground.

A further object of the present invention is to allow, in a simple manner, the removal of the probe after the geothermal plant in which it was used is dismantled, such as to reduce the environmental impact resulting from the installation of this type of vertical probes, as well as to allow the same to be reused in another geothermal plant.

Another object of the present invention is to facilitate the flow of the work liquid flowing within the probe ducts, with a consequent reduction in the energy required to supply the pump moving the work fluid.

These and other objects are achieved by the vertical geothermal probe of the type to be installed within a hole made in the ground, and which comprises at least one first delivery duct and at least one second return duct being fluidically connected to said first delivery duct for carrying a work liquid suitable to exchange heat with the outside, characterized in that it comprises a thermally conductive material that can be, at least partially, associated to said at least one first duct and/or said at least one second duct.

According to the preferred embodiment of the invention, this thermally conductive material is a mixture comprising a solid thermally conductive material and a thermally conductive liquid. Particularly, the solid material is in granular form, has a grain size ranging between 8 and 0.02mm, and is selected from conductive rock sand, basaltic sand, granite sand or metal sand, or the like. The thermally conductive liquid is, on the other hand, selected from water, or mixtures of water and other thermally conductive liquids in varying ratios. The components of the thermally conductive material mixture are at a concentration of more than 20% thermally conductive liquid, preferably, however, to the saturation of the conductive solid material. In fact, after the hole has been filled with sand, the thermally conductive liquid is poured therein until the hole is full, i.e. beyond the sand capacity of absorbing all the thermally conductive liquid poured within the hole.

According to an alternative embodiment of the invention, the thermally conductive material 4 can be also non-solid, i.e. in the liquid or viscous form. In the case of a thermally conductive material in the liquid form, this can be selected from water and ethylene glycol, a coolant or a mixture of water and other thermally conductive liquids in varying ratios, and the like.

Furthermore, in the case where the probe has been provided in a ground that is not rocky, and thus not particularly stable, it can also comprise an outer perimetral jacket enclosing said at least one delivery duct and said at least one return duct therein, and which is at least partially filled with said thermally conductive material.

Furthermore, still according to said second embodiment of the invention, the containment jacket can have, at least at one portion thereof, microholes, or in an equivalent manner, microslits. This results to be particularly effective when a subsurface aquifer is present. In fact, in this case, the groundwater (from the water-bearing stratum) results to be the thermally conductive liquid. Still in the case of the presence of an aquifer, the grain size of the solid thermally conductive material can be selected such as to be greater, until proximate to the aquifer level, such as from 6 to 2mm, and lower above the aquifer, such as from 2 to 0.06mm. Thereby, the groundwater penetrating through the microholes or microslits of the jacket, is capable of flowing upwards by capillary effect until when it saturates the thermally conductive solid material thereabove.

According to a third embodiment of the probe, this can comprise, at the ends of said first delivery duct and said second return duct, temporary connecting means to an upper or lower end element, for said probe. This connecting means comprise a flange welded to the end of said first and said second ducts.

According to a fourth embodiment of the probe, the flange is also used to associated a further probe of a preset length to the probe. Thereby, the probe is no longer provided as one piece, as normally occurs with the prior art probes, but is installed by modules, the number of which depends on the depth of the hole made in the ground and the length of each module.

Furthermore, the flange comprises a plurality of passageways for said mixture of thermally conductive material, which are arranged at the perimetral portion of the flange. Thereby, in the case of installation of more vertical probes, one above the other, the mixture of thermally conductive material would pass in a more deep manner through said passageways to the probe. The flanges have a cross size that is slightly lower than or at most equal to the cross size of said jacket such as to facilitate, however, the mixture of thermally conductive material to pass therethrough.

Furthermore, still according to the third or fourth embodiment of the invention, the lower end element for said probe comprises a plurality of radial baffles for conveying the work fluid exiting said delivery duct to said return duct.

The probe according to the invention can have a first central duct and a plurality of second ducts that are radially arranged relative to the central one, such as to increase, at the same length of a generic probe, the surface of heat exchange with the mixture of thermally conductive mixture.

Said at least one first duct, said at least one second duct, as well said jacket, can be made of a metal material selected from steel, galvanized steel, cast iron, copper, aluminium and alloys thereof, brass or any other building material. In fact, the heat exchange with the mixture of thermally conductive material and accordingly with the ground is thus considerably increased, thereby increasing the effectiveness of the probe.

Further features and advantages of the present invention will be better understood from the detailed description of one or more preferred, though non-limiting, embodiments of the geothermal probe according to the invention, which are illustrated in the annexed figures, in which:
Fig. 1 is a geothermal probe according to the invention, within a hole made in the ground;
Fig. 2 is a view of the geothermal probe in accordance with a second embodiment of the invention;
Fig. 3 is a geothermal probe in accordance with a third embodiment of the invention;
Fig. 4 is a geothermal probe in accordance with a fourth embodiment of the invention;
Fig. 5 illustrates a perspective view of an end of the geothermal probe in Fig. 4;
Fig. 6 is a perspective view of a lower end element of the geothermal probe in Fig. 4;
Fig. 7 is a perspective view of an upper end element of the geothermal probe in Fig. 4;
Fig. 8 is a longitudinal section of two probes according to the invention, connected to each other.

With particular reference to these figures, a vertical geothermal probe according to the present invention has been designated with 1 .

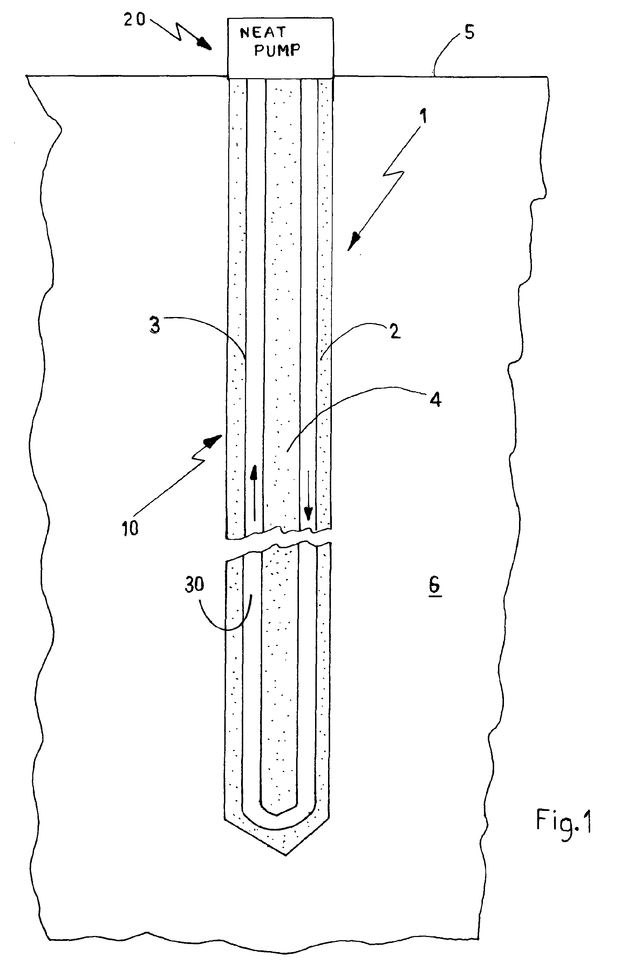

In Fig. 1 is illustrated a geothermal probe 1 being installed within a hole 10 made in the ground 6, and which comprises a first delivery duct 2 and a second return duct 3 which are fluidically connected to each other to carry a work liquid 30, of the type water and ethylene glycol, or the like, which is suitable to exchange heat with the fluid of the heat pump 20 placed at the natural surface 5. The probe 1 comprises a thermally conductive (i.e. heat conductive) material 4 that can be associated with the first duct 2 and second duct 3, and which is capable of providing faster heat exchanges between the work liquid 30 and the ground 6.

The thermally conductive material 4 is a mixture comprising a granular solid material and a thermally conductive liquid. Particularly, the granular solid material has a grain size ranging between 8 and 0.02 mm and is selected from conductive rock sand, basaltic sand, granite sand or metal sand or the like. On the other hand, the thermally conductive liquid is selected from water, or mixtures of water and other thermally conductive liquids at varying ratios. The components of the mixture of thermally conductive material are at such a concentration that the thermally conductive liquid is higher than 20%, and preferably, however, the mixture is saturated by the thermally conductive liquid. Thereby, as soon as the probe 1 is lowered within the hole 10, the latter is filled with this mixture of thermally conductive material 4 in order to stabilize the probe 1 within the hole 10 and improve the effectiveness thereof relative to the prior art probes. The granular solid material is brought to saturation by the thermally conductive liquid. Practically, the thermally conductive liquid is poured within the hole 10 until when it completely fills the latter, i.e. beyond the capacity of the solid thermally conductive material. This characteristic is required since, in this way, the possibility that air bubbles may be left within the hole 10 is avoided, which bubbles, in addition to reducing the efficacy of the heat exchange of probe 1, may cause an unstable positioning of the probe 1.

According to an alternative embodiment of the invention, the thermally conductive material can also be non-solid, i.e. in the liquid form. In this case, the thermally conductive liquid is selected from water and ethylene glycol, a refrigerant or heating fluid, or a mixture of water and other thermally conductive liquids in varying ratios, or the like.

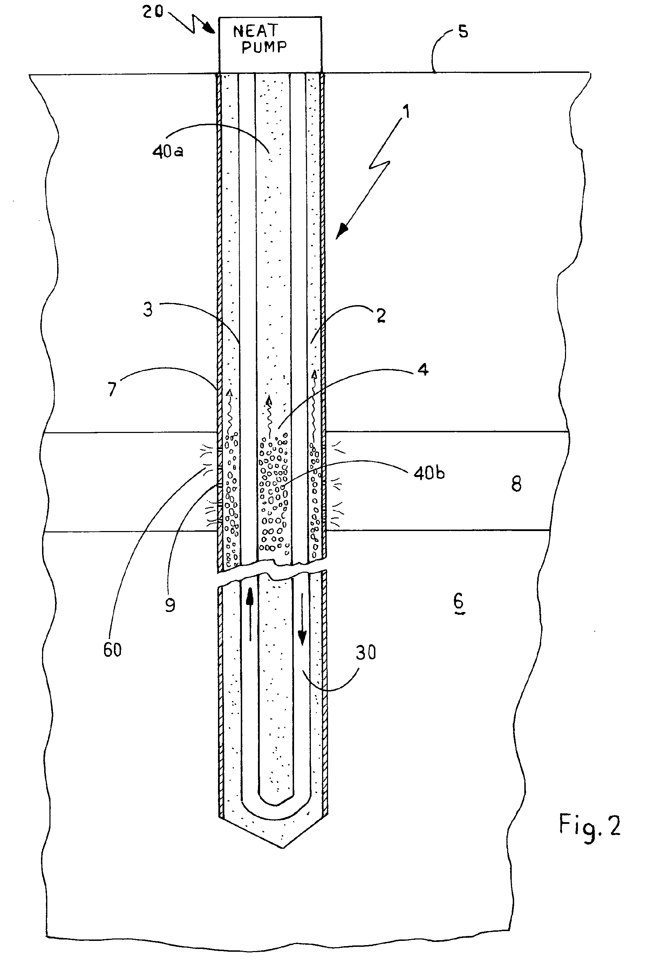

In Fig. 2 a probe 1 is shown in accordance with a second embodiment of the invention. The probe 1 comprises an outer perimetral jacket 7 enclosing the delivery duct 2 and return duct 3 therein, and which is also filled with the mixture of thermally conductive material 4. This type of probe 1 results to be particularly suitable for being used in a ground that is not rocky, and thus not particularly stable, or in the presence of a subsurface aquifer 8.

As shown in Fig. 2, when an aquifer 8 is present, the jacket 7 can advantageously have, and at least at one portion 60 thereof, a plurality of microholes 9, or microslits. In fact, in this case, the groundwater 8 passes through said microholes 9 thus entering within the jacket 7. The groundwater itself thus results to be the thermally conductive liquid comprised within the mixture 4 of thermally conductive material. Again, in the presence of an aquifer, the grain size of the solid conductive material can be selected such as to be greater 40a until proximate to the level of the aquifer 8, such as from 6 to 2mm, and lower 40b above the aquifer 8, such as from 2 to 0.06 mm. Thereby, the groundwater penetrating through the microholes 9 of the jacket 7 is capable of flowing upwards by capillary effect until when it saturates the solid thermally conductive material thereabove.

According to a third embodiment of the probe, this can comprise, at the ends 17 and 18 of said first delivery duct 2 and said second return duct 3, means 19 for temporary connection to an upper 100 or lower 101 end terminal, for said probe 1.

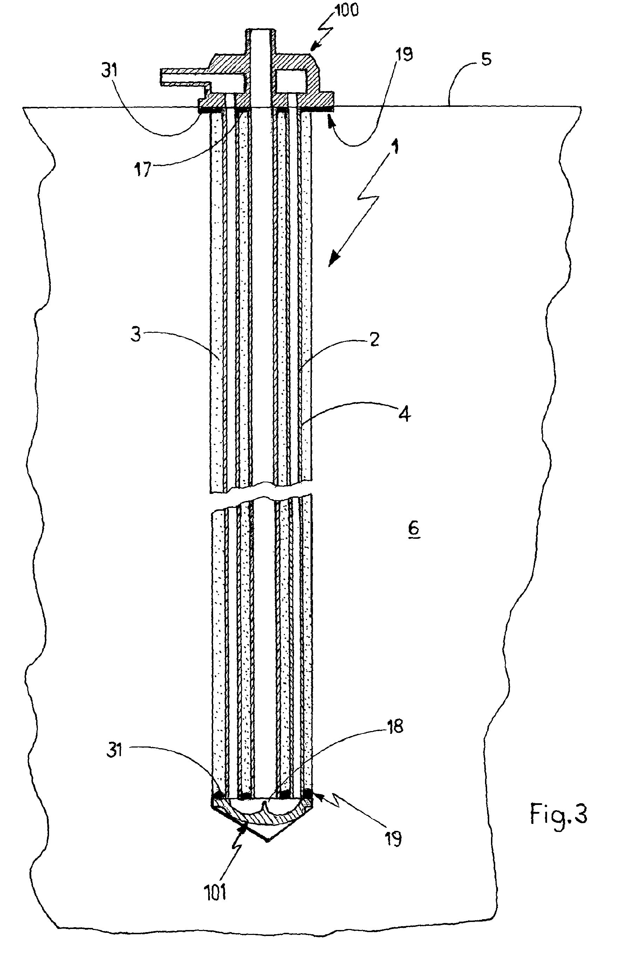

In Fig. 3 a probe 1 is shown to be provided with said connecting means 19. These means 19 comprise a flange 31 welded to each end 17 and 18 of the first and second ducts.

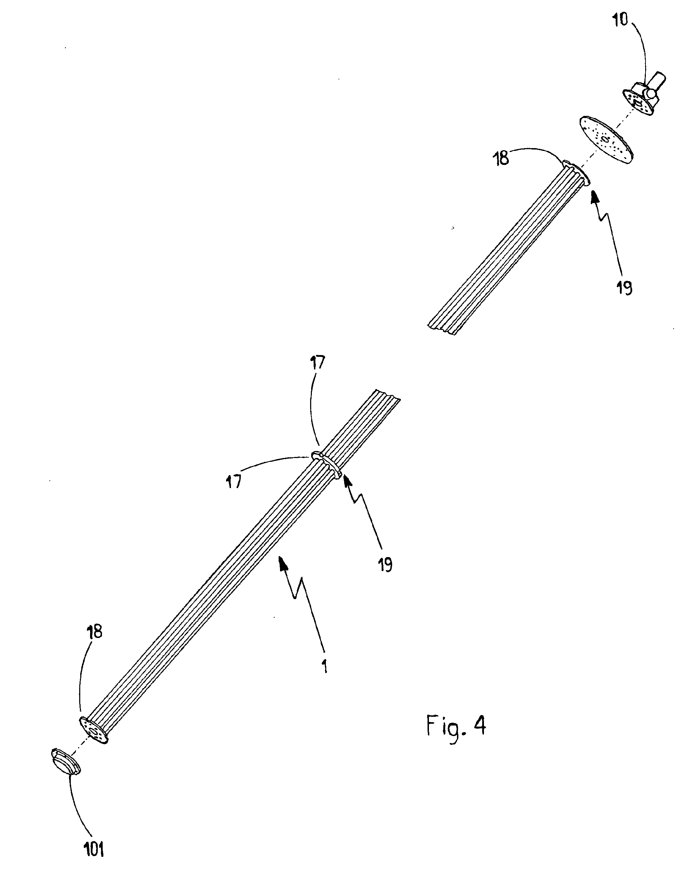

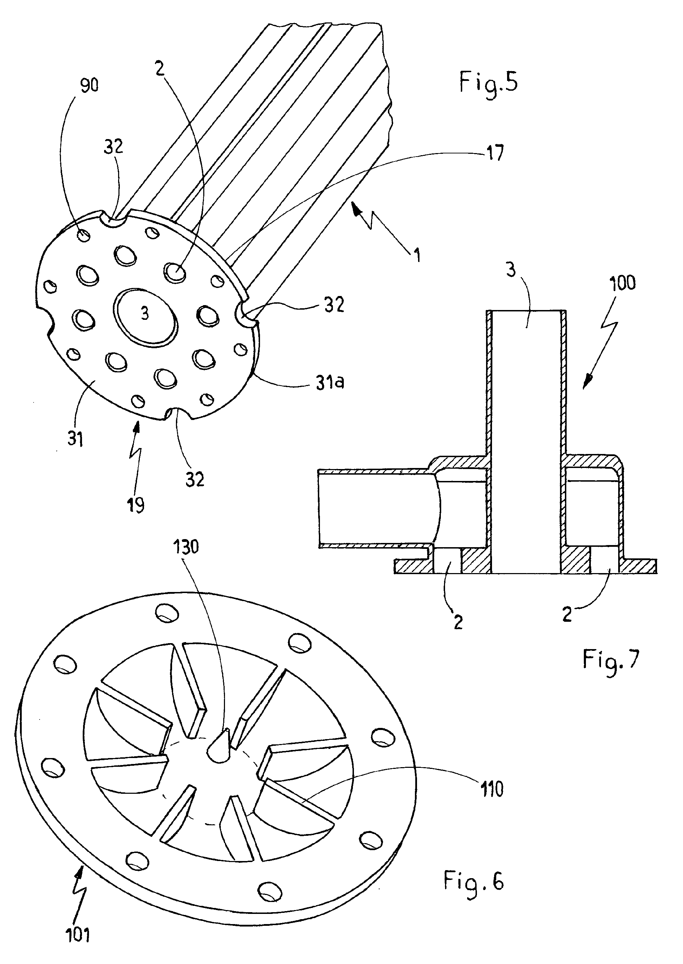

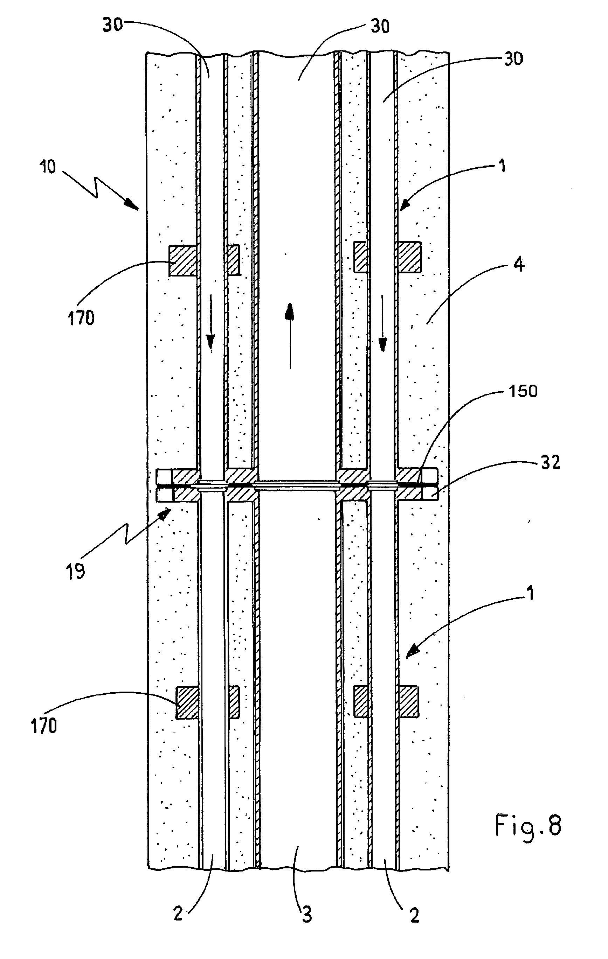

According to a fourth embodiment of the invention (Fig. 4 to 8), the flange 31 is used to connect other geothermal probes 1. Thereby, the probe 1 is no longer made as one piece, like prior art probes, but rather it is installed to modules of a predetermined length, the number of which depends on the depth of the hole 10 made in the ground and the length of each module. The flange further comprises a plurality of passageways 32 for said mixture of thermally conductive material 4, which are arranged at the perimetral portion 31 a of the flange 31. Thereby, in the case of installation of more vertical probes, one above the other, (Fig. 4 and 8), the mixture of thermally conductive material 4 passes through said passageways 32 to the deepest probe 1. The flange 31 further comprises a plurality of openings 90 suitable to receive removable connecting means (not shown herein), such as, for example, screws or the like, for removably connecting the probe 1 to another probe 1 or end elements 100 and 101 of the probe 1. In this circumstance, between the two flanges 31 of the two probes 1, a seal element 150 is provided to avoid leakage of work liquid upon operation of the geothermal plant (not shown herein). The flanges 31 have a cross size slightly lower than, or at most equal to the cross size of said jacket 7, such as, however, to facilitate the mixture of conductive material 4 to pass therethrough.

Furthermore, still according to the third or fourth embodiments of the invention, the lower end element 101 for said probe 1 comprises a plurality of radial baffles 110, radially arranged, to convey the work fluid 30 exiting the delivery duct 2 to the return duct 3. At the center of the lower end element 101 is comprised a flow diverter 130 , substantially cone-shaped, which is capable of suitably divide the flow coming from the delivery duct 2 to the return duct 3. Thereby, the flow of the work liquid flowing within the ducts of the probe can be facilitated, with a consequent reduction in the energy required for supplying the pump moving the work fluid.

The probe, according to the fourth embodiment described herein, has a first central duct 2 and a plurality of second ducts 3, eight in this case, which are radially arranged relative to the central one, such as to considerably increase, at the same size of the hole made in the ground and at the same length of a generic probe, the heat exchange surface with the mixture of thermally conductive material.

It should be observed that a probe 1 having a plurality of first ducts 2 radially arranged relative to a second central duct 3, is still contemplated within the scope of protection of the present invention, and differentiates from the embodiment described above only in that the work fluid flows, throughout the delivery duct, along the eight first ducts 2, which are radial relative to the central duct 3, whereas the work fluid, during the return tract, flows along the second central duct 3. This configuration is shown in Fig. 8.

The ducts 2 and 3, as well as the jacket 7, when provided, can be made of a metal material selected from steel, galvanized steel, cast iron, copper, aluminium and alloys thereof, brass or other building material, which advantageously considerably increases the heat exchange with the mixture of conductive material, and accordingly with the ground, thus increasing the efficacy of the probe.

It should be also understood that the present invention cannot be limited only to the use of probes 1 having metal ducts, but also of probes made of plastics, for which, however, a considerable increased efficacy would be achieved.

The probe 1 can also comprise a heat exchange crown (or exchange ring) 170 that is arranged in an intermediate position between the ends 17 and 18 of said probe, such as to further increase the efficacy of the heat exchange with the ground.

It should be further observed that, while a thermally conductive material has been discussed herein above in the form of mixture or in the liquid form, a thermally conductive material in solid form still falls within the scope of protection of the present invention. This material in solid form can be selected from conductive rock sand, basaltic sand, granite sand or metal sand, or the like. In this case, the hole 10 is completely filled with this solid thermally conductive material.

Furthermore, it should be observed that, while a vertical geothermal probe has been discussed herein above, however, a horizontal probe still falls within the scope of protection of the present invention.

## Claims

1. A geothermal probe of the type to be installed within a hole made in the ground, and which comprises at least one first delivery duct and at least one second return duct being fluidically connected to said first delivery duct for carrying a work liquid suitable to exchange heat with the outside, **characterized in that** it comprises a thermally conductive material that can be, at least partially, associated to said at least one first duct and/or said at least one second duct.

2. The probe according to claim 1, **characterized in that** said thermally conductive material is a mixture comprising a solid thermally conductive material and a thermally conductive liquid.

3. The probe according to claim 2, **characterized in that** said solid material is in granular form.

4. The probe according to claim 3, **characterized in that** said granular solid material has a grain size ranging between 8 and 0.02mm.

5. The probe according to claim 4, **characterized in that** said granular material is selected from conductive rock sand, basaltic sand, granite sand or metal sand, or the like.

6. The probe according to any preceding claim, **characterized in that** said thermally conductive liquid is selected from water or mixtures of water and other thermally conductive liquids in varying ratios.

7. The probe according to any preceding claim, **characterized in that** said granular material and said thermally conductive liquid are at more than 20% thermally conductive liquid concentration.

8. The probe according to claim 7, **characterized in that** said granular material is saturated by said thermally conductive liquid.

9. The probe according to any preceding claim, **characterized in that** said thermally conductive material is in non-solid form.

10. The probe according to any preceding claim, **characterized in that** it comprises an outer perimetral jacket, which encloses said at least one delivery duct and said at least one return duct therein, and which is at least partially filled with said mixture of thermally conductive material.

11. The probe according to claim 10, **characterized in that** said containment jacket has, at least at one portion thereof, microholes or microslits.

12. The probe according to any preceding claim, **characterized in that** it comprises at the ends of said first delivery duct and said second return duct, means for temporary connection to a second probe or to an end element, either upper or lower, for said probe.

13. The probe according to claim 12, **characterized in that** said connecting means comprise a flange welded to each of the ends of said first and said second ducts.

14. The probe according to claim 13, **characterized in that** said flange comprises a plurality of passageways for said mixture of thermally conductive material and wherein said passageways are arranged at the perimetral portion of said flange.

15. The probe according to any preceding claim, **characterized in that** said lower end element for said probe comprises a plurality of radial baffles for conveying the work fluid exiting said delivery duct to said return duct.

16. The probe according to any preceding claim, **characterized in that** said flanges have a cross size that is slightly lower than, or at most equal to the cross size of said jacket.

17. The probe according to any preceding claim, **characterized in that** it comprises at least one heat exchange crown arranged in an intermediate position between the ends of said probe.

18. The probe according to any preceding claim, **characterized in that** said at least one first duct and said at least one second duct, as well as said jacket, are made of a metal material selected from steel, galvanized steel, cast iron, copper, aluminium and alloys thereof, brass or other building material.

19. The probe according to any preceding claim, **characterized in that** said at least one first delivery duct is centrally arranged and said at least one second return duct is radially arranged relative to said at least one first delivery duct, of vice versa.

20. The probe according to any preceding claim, **characterized in that** said thermally conductive material is in solid form, and is selected from conductive rock sand, basaltic sand, granite sand or metal sand, or the like.

21. The probe according to any preceding claim, **characterized in that** said probe is vertical.
